# EUROPÄISCHE PATENTSCHRIFT

(11) **EP 1 589 386 B1**
(45) Veröffentlichungstag und Bekanntmachung des Hinweises auf die Patenterteilung: **10.01.2018**
(21) Anmeldenummer: 05006606.7
(22) Anmeldetag: 24.03.2005
(51) Int. Cl.: G05B 19/042, G05B 19/05

(54) **Prozesssteuerung**
Process control system
Système de commande de processus

(30) Priorität: 16.04.2004 DE 102004018642
(43) Veröffentlichungstag der Anmeldung: 26.10.2005
(73) Patentinhaber: SICK AG, 79183 Waldkirch (DE)
(72) Erfinder: Dold, Franz, 78120 Furtwangen (DE); Hippenmeyer, Irina, 79211 Denzlingen (DE); Kendall, Craig, Farmington, MN 55024 (US); O'Laughlin, Jim, Belle Plaine, MN 56011 (US)
(74) Vertreter: Manitz Finsterwald Patentanwälte PartmbB

(56) Entgegenhaltungen:
- EP-A- 1 054 309
- DE-A1- 10 240 584
- US-A1- 2001 049 564
- US-A1- 2002 093 951
- US-A1- 2002 126 620
- US-B1- 6 370 438

## Beschreibung

Die Erfindung betrifft ein Verfahren sowie ein System zur Prozesssteuerung.

In vielen Applikationen der Automatisierungs- und Prozesstechnik muss die Prozesssteuerung nicht nur den eigentlichen Arbeitsprozess steuern, sondern es müssen außerdem Sicherheitsaspekte berücksichtigt werden. Bei der Steuerung von Prozesseinrichtungen, beispielsweise Aktoren, ist eine Kombination von Prozessdaten und Sicherheitsdaten bzw. eine Kombination der entsprechenden Signale beispielsweise dann erforderlich, wenn sicherheitskritische bzw. für den Menschen oder auch für Investitionsgüter gefährliche Bewegungen eines von einem Aktor angetriebenen Maschinenteils sowohl von der eigentlichen Prozesssteuerung kontrolliert als auch in einem Not- oder Störfall von der Sicherheitssteuerung abgeschaltet werden soll.

Es sind bereits unterschiedliche Methoden zur Kombination der Prozesssteuerung mit der Sicherheitssteuerung bekannt:
Gemäß einer Methode sind die Prozesssteuerung und die Sicherheitssteuerung voneinander getrennt: die Steuerung des eigentlichen Arbeitsprozesses der Prozesseinrichtung erfolgt durch die Prozesssteuerung. Im Fehlerfall schaltet die Sicherheitssteuerung unabhängig von der Prozesssteuerung die Spannungsversorgung der Prozesseinrichtung ab, wodurch die Prozesseinrichtung ungesteuert ausläuft. Es existieren verbesserte Lösungen, bei denen Aktoren mit sogenannter integrierter Sicherheit zum Einsatz kommen, die getrennte Schalteingänge für die Prozesssteuerung einerseits und die Sicherheitssteuerung andererseits aufweisen.

Gemäß einer weiteren bekannten Methode werden die Prozesslogik einerseits und die Sicherheitslogik andererseits in der Sicherheitssteuerung miteinander kombiniert. Es erfolgt hierbei in der Sicherheitssteuerung eine Berücksichtigung der Prozessdaten und der Sicherheitsdaten, wobei der zu steuernden Prozesseinrichtung lediglich ein resultierendes Signal übermittelt wird. Von Nachteil ist hierbei der erforderliche Datenaustausch zwischen der Prozesssteuerung und der Sicherheitssteuerung. In der Praxis werden zunehmend Feldbussysteme eingesetzt, so dass bei Anwendung dieser bekannten Methode sowohl in die Prozesssteuerung als auch in die Sicherheitssteuerung ein gemeinsames Kommunikationsprotokoll implementiert werden muss.

Eine weitere bekannte Methode schlägt vor, den Datenstrom von der Prozesssteuerung zur Prozesseinrichtung durch die Sicherheitssteuerung zu überwachen. Wie bei der vorstehend geschilderten bekannten Methode ist hier allerdings von Nachteil, dass die Daten der Prozesssteuerung im Sicherheitsprogramm der Sicherheitssteuerung berücksichtigt werden müssen. Hierdurch wird nicht nur der Rechenaufwand in der Sicherheitssteuerung erhöht, sondern es ist außerdem eine Kommunikationsbeziehung zwischen der Prozesssteuerung und der Sicherheitssteuerung erforderlich.

Problematisch ist ferner, dass der Datenaustausch von Prozessdaten und Sicherheitsdaten im Sicherheitsprogramm häufig kritisch ist, denn es besteht die Gefahr, dass insbesondere durch Unbedarftheit beim Anwender für Sicherheitsfunktionen ausschließlich nicht sichere Eingangssignale der Prozesssteuerung verwendet werden, die nicht sicher erfasst wurden. So kann beispielsweise versehentlich eine Konfiguration realisiert werden, in der an einem nicht sicheren Eingangsmodul ein einem "Not-Aus" entsprechendes Signal eingelesen und hierdurch aufgrund des Datenaustausches in der Sicherheitssteuerung eine gefährliche Bewegung eines Aktors gesteuert wird. Dies stellt einen für die praktische Anwendung nicht akzeptierbaren Bruch in der Sicherheitskette dar.

Zum Stand der Technik wird im übrigen allgemein auf DE 199 28 517 C2, DE 199 25 693 A1, DE 102 01 212 A1, DE 102 11 939 A1, DE 102 11 938 A1 sowie DE 199 22 561 A1 verwiesen.

Ein Verfahren zur Prozesssteuerung gemäß dem Oberbegriff des unabhängigen Anspruchs 1 ist aus der US-A-2001/0049564 bekannt. Die EP 1 054 309 A2 beschreibt eine logische Verknüpfung von Sicherheitssignalen.

Aufgabe der Erfindung ist es, Prozesssteuerungen auf möglichst einfache und kostengünstige Weise möglichst sicher zu machen.

Die Lösung dieser Aufgabe erfolgt durch die Merkmale der unabhängigen Ansprüche.

Erfindungsgemäß ist für die zu steuernde Prozesseinrichtung, z.B. einen Aktor, eine lokale Steuereinheit vorgesehen, die zur logischen Verknüpfung der Prozesssignale und der Sicherheitssignale ausgebildet ist. Die Steuereinheit verarbeitet die Prozesssignale und die Sicherheitssignale und stellt das Ergebnis der logischen Verknüpfung an ihrem Steuerausgang bereit, an den der Aktor angeschlossen ist. Bei dem Steuerausgang der Steuereinheit handelt es sich folglich um einen sicherheitsgerichteten Ausgang, der unter Berücksichtigung der nicht sicheren Prozesssignale, die auch als Standard-Signale bezeichnet werden, gesteuert wird.

Durch das erfindungsgemäße Vorsehen der lokalen Steuereinheit wird eine vorteilhafte Dezentralisierung der Prozesssteuerung erzielt, die insbesondere mit einer geringen Anzahl von Komponenten auskommt. Durch die Verknüpfung der Prozesssignale mit den Sicherheitssignalen in der lokalen Steuereinheit wird die Logik der Steuerung gewissermaßen in die dezentrale, lokale Steuereinheit verlagert. Durch die logische Verknüpfung der Prozesssignale und der Sicherheitssignale kann insbesondere eine Überwachung auf Übereinstimmung von Prozesssteuerung und Sicherheitssteuerung in der lokalen Steuereinheit erfolgen, wodurch ein besonders hohes Maß an Sicherheit erreicht wird. Von Vorteil ist ferner, dass bestehende Anlagen einfach durch den Einbau der erfindungsgemäßen Steuereinheit nachgerüstet werden können, und zwar unter Beibehaltung der existierenden Module zur Prozess- und Sicherheitssteuerung.

In Bezug auf die Sicherheit können das erfindungsgemäße Verfahren und das erfindungsgemäße System entweder in einer so genannten Local-Auslegung oder einer so genannten Remote-Auslegung realisiert werden. In der Local-Variante ist das Sicherheitsmodul direkt mit der Steuereinheit verbunden und insbesondere im Bereich der Steuereinheit und damit der zu steuernden Prozesseinrichtung angeordnet. In der Remote-Variante ist das Sicherheitsmodul ebenso wie das Prozessmodul über ein gemeinsames Kommunikationssystem insbesondere in Form eines Feldbussystems mit der Steuereinheit verbunden.

Erfindungsgemäß von Vorteil insbesondere bei der Remote-Variante ist, dass für die Verknüpfung der Prozessdaten mit den Sicherheitsdaten in der lokalen Steuereinheit keine Kommunikationsbeziehung zwischen der Sicherheitssteuerung und der Prozesssteuerung erfolgen muss. Ferner braucht in der Sicherheitssteuerung keine erhöhte Rechenleistung zur logischen Verknüpfung der Signale vorgehalten zu werden. Dies ermöglicht es, dem Anwender eine hinsichtlich der Kosten und der Leistung optimierte Lösung anzubieten.

Ferner ist von Vorteil, dass aufgrund der beiden bestehenden Kommunikationsbeziehungen zwischen der Steuereinheit einerseits und der Sicherheitssteuerung und der Prozesssteuerung andererseits am Steuerausgang der Steuereinheit eventuell auftretende Fehler gleichzeitig an die Sicherheitssteuerung und die Prozesssteuerung gemeldet werden können. Es ist insbesondere nicht erforderlich, eine Fehlerdiagnose von der Steuereinheit über die Sicherheitssteuerung an die Prozesssteuerung durchzuschleifen.

Insbesondere bei der Local-Variante, bei der das Sicherheitsmodul direkt mit der Steuereinheit verbunden ist, ist von Vorteil, dass die Prozesssteuerung auf den fehlersicheren Steuerausgang der Steuereinheit zugreifen kann, ohne dass weitere Sicherheitskomponenten in das bestehende Kommunikationssystem, insbesondere ein Feldbussystem, über welches die Prozesssteuerung mit der lokalen Steuereinheit kommuniziert, integriert werden müssen. Insbesondere kann ein entsprechendes Busmodul in ein bestehendes nicht sicheres Feldbussystem eingebunden werden.

Da zusätzlich zu dem direkt mit der Steuereinheit verbundenen Sicherheitsmodul keine zusätzliche Sicherheitssteuerung im Prozesssystem erforderlich ist, ergibt sich für den Anwender eine erhebliche Kostenersparnis. Ein an der lokalen Steuereinheit vorgesehener lokaler Sicherheitseingang für das Sicherheitsmodul kann direkt den lokalen sicheren Steuerausgang der Steuereinheit unter Berücksichtigung der Prozesssignale steuern.

Gemäß einer Variante der Erfindung wird zumindest ein Sicherheitssignal, das mit den Prozesssignalen logisch verknüpft wird, selbst durch eine logische Verknüpfung von die Prozesssicherheit betreffenden Sicherheitssignalen gebildet. Hierdurch kann mit Hilfe der lokalen Steuereinheit gewissermaßen eine dezentrale Sicherheitssteuerung realisiert werden, die grundsätzlich beliebig komplex ausgelegt sein kann.

Weitere bevorzugte Ausführungsformen der Erfindung sind in den abhängigen Ansprüchen, der Beschreibung sowie der Zeichnung angegeben.

Ein besonders hohes Maß an Sicherheit wird erzielt, indem erfindungsgemäß die logische Verknüpfung zwischen den Prozesssignalen und den Sicherheitssignalen derart ausgelegt wird, dass ein diskrepantes Signaleingangsmuster ein Verbleiben des Steuerausgangs in einem sicheren Zustand zur Folge hat.

Vorzugsweise wird die logische Verknüpfung zwischen den Prozesssignalen und den Sicherheitssignalen als eine logische UND-Verknüpfung ausgelegt.

Entsprechend wird bevorzugt für den Fall, dass das mit den Prozesssignalen zu verknüpfende Sicherheitssignal selbst durch eine logische Verknüpfung von die Prozesssicherheit betreffenden Sicherheitssignalen gebildet wird, die logische Verknüpfung dieser Sicherheitssignale als eine logische UND-Verknüpfung ausgelegt.

Grundsätzlich kann jedoch die logische Verknüpfung jede beliebige Form annehmen.

Wie eingangs bereits angedeutet, ist bei einer bevorzugten Ausgestaltung des erfindungsgemäßen Prozesssteuerungssystems zumindest das Prozessmodul über ein Feldbussystem mit der lokalen Steuereinheit verbunden.

Bei der ebenfalls eingangs bereits angesprochenen Local-Variante ist vorzugsweise vorgesehen, dass das Prozessmodul entfernt von der Steuereinheit angeordnet und über ein zentrales Kommunikationssystem, insbesondere ein Feldbussystem, mit der Steuereinheit verbunden ist, und dass das Sicherheitsmodul lokal im Bereich der Steuereinheit und insbesondere entfernt von dem Prozessmodul angeordnet und direkt mit der Steuereinheit verbunden ist.

Das Prozessmodul ist vorzugsweise in Form einer SPS (speicherprogrammierbare Steuerung) vorgesehen.

Das Sicherheitsmodul ist vorzugsweise in Form eines Sicherheitssensors vorgesehen, kann grundsätzlich aber auch eine Sicherheitssteuerung, insbesondere in Form einer SPS, umfassen.

Wie vorstehend in Bezug auf das erfindungsgemäße Prozesssteuerungsverfahren bereits angedeutet, kann die Steuereinheit gemäß einem weiteren Ausführungsbeispiel der Erfindung mehrere Sicherheitseingänge für Sicherheitssignale umfassen, die mittels des Logikmoduls der Steuereinheit zu einem resultierenden Sicherheitssignal logisch miteinander verknüpfbar sind, wobei das resultierende Sicherheitssignal mittels des Logikmoduls wiederum mit den Prozesssignalen logisch verknüpfbar ist.

Zur weiteren Erhöhung der Sicherheit ist bevorzugt vorgesehen, dass für zumindest eine, insbesondere für jede, zu steuernde Prozesseinrichtung in der Steuereinheit mehrere, insbesondere zwei, Kanäle vorgesehen sind, die jeweils für die logische Verknüpfung von Prozesssignalen und Sicherheitssignalen ausgebildet sind. Jeder Kanal kann als unabhängiger Sicherheitsabschaltpfad ausgebildet sein, so dass für jede zu steuernde Prozesseinrichtung mehrere, insbesondere zwei, unabhängige Abschaltpfade vorhanden sind.

Gemäß einem weiteren Ausführungsbeispiel der Erfindung kann ein dritter unabhängiger Sicherheitsabschaltpfad dadurch realisiert werden, dass die Spannungsversorgung für den Steuerausgang der Steuereinheit von dem logischen Signalweg und/oder von der Spannungsversorgung der Prozesseinrichtung getrennt vorgesehen ist. Auf diese Weise wird eine zusätzliche Möglichkeit geschaffen, den Steuerausgang sicher stillzusetzen.

Ferner kann erfindungsgemäß vorgesehen sein, dass die Prozesssignale alternativ oder zusätzlich über lokale Sicherheitseingänge und/oder lokale nicht sicherheitsgerichtete Signaleingänge der Steuereinheit zugeführt werden. Die nicht sicherheitsgerichteten Prozessdaten können also auch von den lokalen Sicherheitseingängen bzw. den nicht sicherheitsgerichteten Signaleingängen der lokalen Steuereinheit eingelesen und verknüpft werden.

Die Erfindung wird im Folgenden beispielhaft unter Bezugnahme auf die Zeichnung beschrieben. Es zeigen:
- Fig. 1: schematisch einen Ausschnitt aus einem erfindungsgemäßen Prozesssteuerungssystem in einer Remote-Variante,
- Fig. 2: schematisch eine in dem System von Fig. 1 zum Einsatz kommende erfindungsgemäße Steuereinheit,
- Fig. 3: schematisch einen Ausschnitt aus einem erfindungsgemäßen Prozesssteuerungssystem in einer Local-Variante, und
- Fig. 4: schematisch eine in dem System von Fig. 3 zum Einsatz kommende erfindungsgemäße Steuereinheit.

Sofern nicht anders angegeben, bedeuten im Folgenden die mit "Prozess..." beginnenden Begriffe wie z.B. Prozesssteuerung, Prozessdaten und Prozesssignale, dass kein unmittelbarer Bezug zu Sicherheitsaspekten besteht, d.h. die Prozesssteuerung betrifft ausschließlich den eigentlichen Arbeitsprozess und die Prozesssignale bzw. Prozessdaten beinhalten keine Sicherheitssignale bzw. -daten, sondern stellen ausschließlich so genannte nicht sichere Signale bzw. Daten dar. Zu bemerken ist noch, dass in der Praxis zur Unterscheidung zwischen der "Prozesswelt" und der "Sicherheitswelt" anstelle des Begriffs "Prozess..." auch der Begriff "Standard..." verwendet wird.

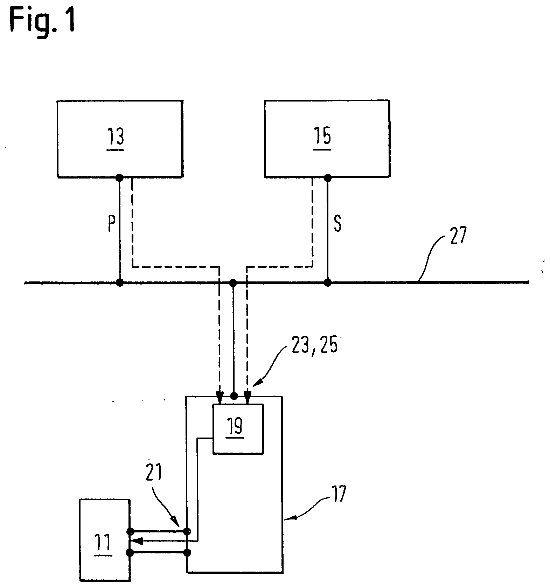

In der Remote-Variante gemäß Fig. 1 kommunizieren eine Prozess-SPS 13 und eine Sicherheits-SPS 15 über ein Feldbussystem 27 mit einer über Signaleingänge 23, 25 an den Feldbus 27 angeschlossenen Steuereinheit 17, die sicherheitsgerichtete Steuerausgänge 21 für zu steuernde Prozesseinrichtungen 11 aufweist. Bei den zu steuernden Prozesseinrichtungen 11 kann es sich beispielsweise um Aktoren bzw. Motoren von Bearbeitungsmaschinen handeln, die Bewegungen ausführen, welche unter bestimmten Umständen für Menschen öder auch Investitionsgüter gefährlich sein können. Zur Unterbindung von solchen sicherheitskritischen Vorgänge ist die Sicherheits-SPS 15 vorgesehen, während die Prozess-SPS 13 unabhängig von Sicherheitsaspekten den eigentlichen Arbeitsprozess steuert.

Fig. 1 zeigt lediglich eine Steuereinheit 17, an die lediglich eine Prozesseinrichtung 11 angeschlossen ist. Grundsätzlich können die Prozesssteuerung 13 und die Sicherheitssteuerung 15 eine beliebig große Anzahl von an das Feldbussystem 27 angeschlossenen Steuereinheiten 17 und damit Prozesseinrichtungen 11 steuern. Ferner ist es grundsätzlich möglich, dass an eine Steuereinheit 17 eine Mehrzahl von Prozesseinrichtungen 11 angeschlossen ist. In diesem Fall ist die Steuereinheit 17 mit einer Mehrzahl von sicherheitsgerichteten Steuerausgängen 21 versehen.

Durch die in Fig. 1 gestrichelt dargestellten Signalwege ist angedeutet, dass für die Erfindung das Vorsehen eines zentralen Kommunikationssystems wie beispielsweise des Feldbussystems 27 nicht zwingend erforderlich ist, sondern die Prozessteuerung 13 und die Sicherheitssteuerung 15 auch direkt mit der Steuereinheit 17 kommunizieren können, die in diesem Fall mit entsprechenden Signaleingängen ausgestattet ist.

Die Steuereinheit 17, die lokal im Bereich der jeweils zu steuernden Prozesseinrichtung 11 und damit dezentral angeordnet ist, weist ein LogikModul 19 auf, in welchem die von der Prozess-SPS 13 kommenden Prozesssignale P und die von der Sicherheits-SPS 15 kommenden Sicherheitssignale S verarbeitet werden, worauf nachstehend näher eingegangen wird. Als Ergebnis dieser Signalverarbeitung stellt das Logikmodul am Steuerausgang 21 der Steuereinheit 17 sichere Steuersignale für die jeweilige Prozesseinrichtung 11 zur Verfügung.

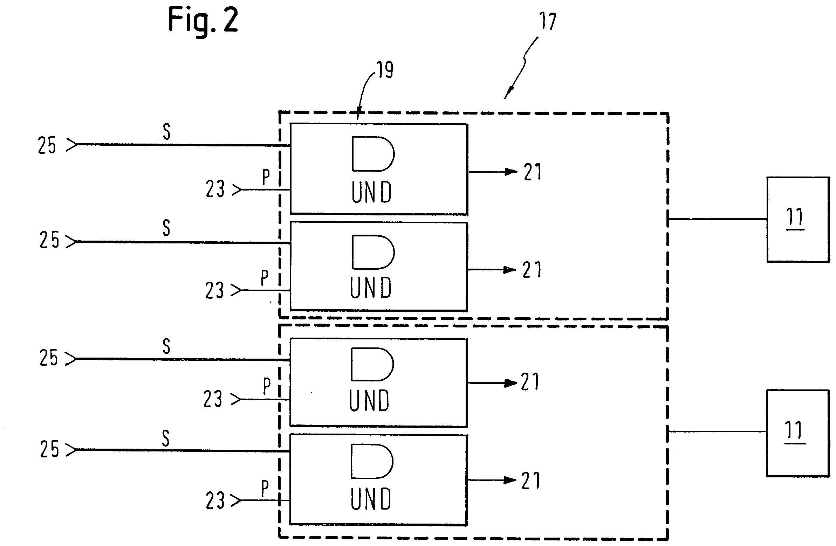

Fig. 2 zeigt schematisch die Einbettung des Logikmoduls 19 der Steuereinheit 17 in das Prozesssystem. In dem dargestellten Ausführungsbeispiel ist für jede der zu steuernden Prozesseinrichtungen 11 eine zweikanalige Ansteuerung vorgesehen, wobei jeweils die beiden Kanäle identisch ausgelegt sind. In jedem Kanal werden die über einen Signaleingang 23 zugeführten Prozessdaten P und die über einen Sicherheitseingang 25 zugeführten Sicherheitsdaten S in dem Logikmodul 19 der Steuereinheit 17 einer logischen UND-Verknüpfung unterzogen. Der entsprechende lokale Sicherheitsausgang 21 der Steuereinheit 17 wird von dem Ergebnis dieser logischen Verknüpfung gesteuert.

Auf diese Weise wird für jeden Kanal ein nicht sicherheitsgerichtetes Signal P der Prozess-SPS 13 (Fig. 1), das auf den sicheren Ausgang 21 der Steuereinheit 17 wirken soll, mit einem sicherheitsgerichteten Signal S der Sicherheits-SPS 15, das auf den gleichen sicheren Ausgang 21 wirken soll, einer logischen UND-Verknüpfung unterzogen.

Da in dem hier beschriebenen Ausführungsbeispiel sowohl die Prozesssignale P als auch die sicherheitsgerichteten Signale S der Sicherheitssteuerung 15 über das industrielle Bussystem 27 zur Steuereinheit 17 übertragen werden, wird für die Übertragung der Sicherheitssignale S ein sicheres Busprotokoll verwendet.

Die logische UND-Verknüpfung im Logikmodul 19 sorgt dafür, dass diskrepante Eingangsmuster dazu führen, dass sichere Ausgänge 21 im sicheren Zustand verbleiben, d.h. es ist ein durchgängiges Signaleingangsmuster von Einsen notwendig, um den betreffenden sicheren Ausgang 21 zu schalten.

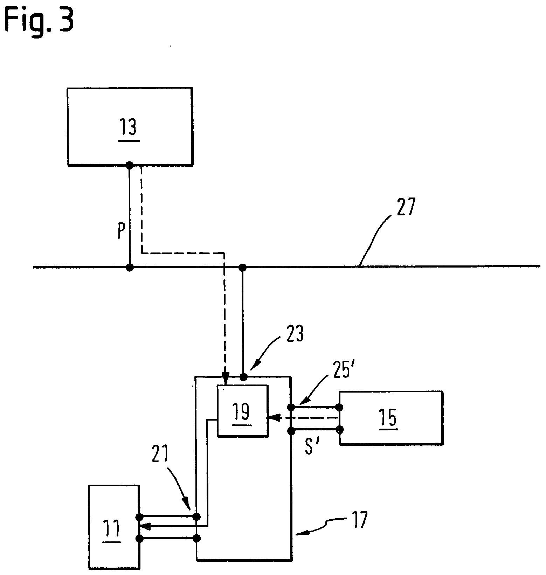

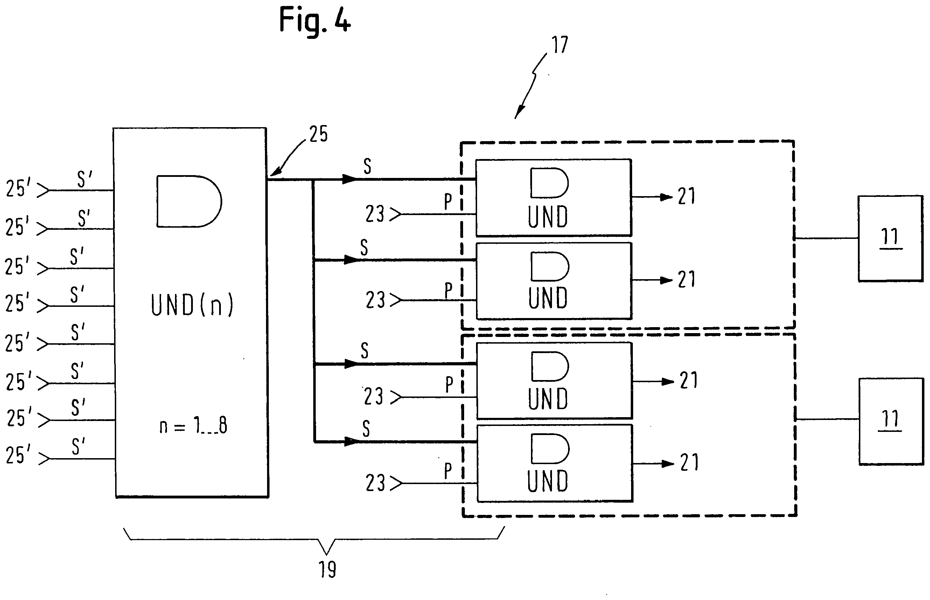

Bei der erfindungsgemäßen Local-Variante gemäß Fig. 3 und 4 ist im Unterschied zu der vorstehend anhand der Fig. 1 und 2 erläuterten Remote-Variante das Sicherheitsmodul 15, das als Sicherheitssensor oder als Sicherheits-SPS ausgebildet sein kann, nicht über das Feldbussystem 27, über welches die Prozess-SPS 13 mit der Steuereinheit 17 kommuniziert, an die Steuereinheit 17 angeschlossen, sondern das Sicherheitsmodul 15 kommuniziert direkt mit der Steuereinheit 17. Das Sicherheitsmodul 15 ist hierbei lokal im Bereich der Steuereinheit 17 und damit im Bereich der zu steuernden Prozesseinrichtung 11 angeordnet.

Auch in dieser Local-Variante kann grundsätzlich eine beliebige Anzahl von Steuereinheiten 17 vorgesehen sein, die jeweils ein oder mehrere Prozesseinrichtungen 11 steuern und an die jeweils ein oder mehrere Sicherheitsmodule 15 angeschlossen sind.

Grundsätzlich ist erfindungsgemäß auch eine gemischte Systemauslegung denkbar, in der eine oder mehrere lokale Steuereinheiten 17 Sicherheitssignale S von einem Remote-Sicherheitsmodul 15 empfangen (entsprechend Fig. 1 und 2; so genannter RSR (Remote Safety Release)) und eine oder mehrere weitere Steuereinheiten 17 jeweils direkt mit einem oder mehreren lokalen Sicherheitsmodulen 15 verbunden sind (entsprechend Fig. 3 und 4; so genannter LSR (Local Safety Release)).

In der Local-Variante ist in dem hier beschriebenen Ausführungsbeispiel gemäß Fig. 4 vorgesehen, dass die mit den Prozessdaten P logisch zu verknüpfenden Sicherheitsdaten S selbst aus einer Mehrzahl von Sicherheitssignalen S' gebildet werden, die von direkt an die Steuereinheit 17 angeschlossenen lokalen Sicherheitsmodulen 15 bereitgestellt werden. Diese Bildung des anschließend mit den Prozesssignalen P zu verknüpfenden Sicherheitssignals S erfolgt ebenfalls durch das Logikmodul 19, wobei auch in diesem Fall die logische Verknüpfung als logische UND-Verknüpfung ausgelegt ist. Diese logische Verknüpfung kann auch in einem separaten Logikmodul erfolgen.

Durch diese vorgeschaltete UND-Verknüpfung der von den direkt an die Steuereinheit 17 angeschlossenen Sicherheitsgeräten 15 gelieferten Sicherheitssignale S' ist wiederum sichergestellt, dass diskrepante Eingangsmuster im sicheren Zustand verbleibende Sicherheitsausgänge 21 der Steuereinheit 17 zur Folge haben.

Ebenso wie die Signalverarbeitung, die für jede der an die Steuereinheit 17 angeschlossenen Prozesseinrichtungen 11 das resultierende Sicherheitssignal S mit den Prozesssignalen P verknüpft, sind auch die lokalen Signaleingänge 25' der Steuereinheit 17 zur weiteren Erhöhung der Sicherheit zweikanalig ausgelegt. In der Steuereinheit 17 bzw. in deren Logikmodul 19 ist also der eigentlichen, die Prozesssignale P einbeziehenden logischen Signalverarbeitung eine zweikanalige Auswertung der eingehenden lokalen Sicherheitssignale S' vorgeschaltet, wobei das Ergebnis dieser vorgeschalteten Auswertung in die nachfolgende logische Verknüpfung eingeht.

Die Erfindung kann grundsätzlich an allen bestehenden industriellen Bussystemen realisiert werden, beispielsweise an den Bussystemen mit der Bezeichnung Profibus, Interbus und DeviceNet sowie an Ethernet-Derivaten. Darüber hinaus ist die Erfindung auch für alle zukünftigen gemischten Bussysteme geeignet, welche eine Übertragung von sowohl Prozessdaten als auch Sicherheitsdaten zulassen.

Die Realisierung der vorstehend anhand der Fig. 1 und 2 beschriebenen RSR-Funktion kann beispielsweise für die Bussysteme DeviceNet und DeviceNet Safety umgesetzt werden. Hierzu wird für den Austausch der Prozessdaten zwischen dem auch als Remote-Ausgangsmodul bezeichneten Sicherheitsmodul (Target) und dem auch als Standard-Steuerung bezeichneten Prozessmodul (Originator) eine Standard-DeviceNet-Verbindung eingerichtet. Über diese Verbindung können mittels einer so genannten herstellerspezifischen Ausgangsassembly die nicht sicheren Eingangsdaten für die RSR-Funktion geliefert werden. Des Weiteren wird eine sichere Kommunikationsverbindung zwischen der Steuereinheit und der Sicherheits-SPS aufgebaut. Über diese Kommunikationsverbindung werden mittels einer dem DeviceNet-Geräteprofil entsprechenden Ausgangsassembly die sicheren Eingangsdaten für die RSR-Funktion übertragen.

Auch die vorstehend in Verbindung mit den Fig. 3 und 4 beschriebene LSR-Funktion kann beispielsweise für das Bussystem DeviceNet umgesetzt werden. Hierzu wird wiederum eine Standard-DeviceNet-Verbindung eingerichtet, um für den Austausch der Prozessdaten zwischen dem Target (Steuereinheit) und dem Originator (Prozess-SPS) zu sorgen. Über diese Verbindung können dann die nicht sicheren Eingangsdaten für die LSR-Funktion mittels einer herstellerspezifischen Ausgangsassembly geliefert werden. Die für die sicherheitsgerichtete Zustimmung notwendigen Sicherheitssignale werden dann von den lokal an die Steuereinheit angeschlossenen Sicherheitssensoren erzeugt.

### Bezugszeichenliste

- 11: Prozesseinrichtung, Aktor
- 13: Prozessmodul, Prozess-SPS
- 15: Sicherheitsmodul, Sicherheits-SPS
- 17: Steuereinheit, Ausgangsmodul
- 19: Logikmodul
- 21: Steuerausgang der Steuereinheit
- 23: Signaleingang der Steuereinheit
- 25, 25': Signaleingäng der Steuereinheit
- 27: Kommunikationssystem, Feldbussystem

- P: Prozesssignal des Prozessmoduls
- S, S': Sicherheitssignal des Sicherheitsmoduls

## Patentansprüche

1. Verfahren zur Prozesssteuerung,
bei dem wenigstens eine zu steuernde Prozesseinrichtung (11) durch zumindest ein Prozessmodul (13) und zumindest ein Sicherheitsmodul (15) gesteuert wird, indem an eine der Prozesseinrichtung (11) zugeordnete lokale Steuereinheit (17) von dem Prozessmodul (13) nicht sicherheitsrelevante Prozesssignale (P) und von dem Sicherheitsmodul (15) die Prozesssicherheit betreffende Sicherheitssignale (S) übermittelt werden, wobei
- die Prozesssignale (P) und die Sicherheitssignale (S) in der Steuereinheit (17) logisch miteinander verknüpft werden, und
- das Ergebnis der logischen Verknüpfung an einem Steuerausgang (21) der Steuereinheit (17) bereitgestellt wird, an den die zu steuernde Prozesseinrichtung (11) angeschlossen ist,
**dadurch gekennzeichnet,**
**dass** das Prozessmodul (13) und das Sicherheitsmodul (15) über ein gemeinsames Kommunikationssystem (27), insbesondere ein Feldbussystem, mit der Steuereinheit (17) kommunizieren und
**dass** die logische Verknüpfung derart ausgelegt wird, dass ein diskrepantes Signaleingangsmuster ein Verbleiben des Steuerausgangs (21) in einem sicheren Zustand zur Folge hat.

2. Verfahren nach Anspruch 1,
**dadurch gekennzeichnet,**
**dass** zumindest ein Sicherheitssignal (S), das mit den Prozesssignalen (P) logisch verknüpft wird, selbst durch eine logische Verknüpfung von die Prozesssicherheit betreffenden Sicherheitssignalen (S') gebildet wird.

3. Verfahren zur Prozesssteuerung,
bei dem wenigstens eine zu steuernde Prozesseinrichtung (11) durch zumindest ein Prozessmodul (13) und zumindest ein Sicherheitsmodul (15) gesteuert wird, indem an eine der Prozesseinrichtung (11) zugeordnete lokale Steuereinheit (17) von dem Prozessmodul (13) nicht sicherheitsrelevante Prozesssignale (P) und von dem Sicherheitsmodul (15) die Prozesssicherheit betreffende Sicherheitssignale (S) übermittelt werden, wobei
- die Prozesssignale (P) und die Sicherheitssignale (S) in der Steuereinheit (17) logisch miteinander verknüpft werden, und
- das Ergebnis der logischen Verknüpfung an einem Steuerausgang (21) der Steuereinheit (17) bereitgestellt wird, an den die zu steuernde Prozesseinrichtung (11) angeschlossen ist,
**dadurch gekennzeichnet,**
**dass** zumindest ein Sicherheitssignal (S), das mit den Prozesssignalen (P) logisch verknüpft wird, selbst durch eine logische Verknüpfung von die Prozesssicherheit betreffenden Sicherheitssignalen (S') gebildet wird und
**dass** die logische Verknüpfung derart ausgelegt wird, dass ein diskrepantes Signaleingangsmuster ein Verbleiben des Steuerausgangs (21) in einem sicheren Zustand zur Folge hat.

4. Verfahren nach Anpruch 3,
**dadurch gekennzeichnet,**
**dass** das Prozessmodul (13) und das Sicherheitsmodul (15) über ein gemeinsames Kommunikationssystem (27), insbesondere ein Feldbussystem, mit der Steuereinheit (17) kommunizieren.

5. Verfahren nach Anpruch 3,
**dadurch gekennzeichnet,**
**dass** das Prozessmodul (13) über ein zentrales Kommunikationssystem (27), insbesondere ein Feldbussystem, und das Sicherheitsmodul (15) direkt mit der Steuereinheit (17) kommuniziert.

6. Verfahren nach einem der vorhergehenden Ansprüche,
**dadurch gekennzeichnet,**
**dass** die logische Verknüpfung zwischen den Prozesssignalen (P) und den Sicherheitssignalen (S) und/oder zwischen mehreren zur Bildung eines resultierenden Sicherheitssignals (S) dienenden Sicherheitssignalen (S') als eine logische UND-Verknüpfung ausgelegt wird.

7. System zur Prozesssteuerung, insbesondere zur Durchführung eines Verfahrens nach einem der vorhergehenden Ansprüche,
mit wenigstens einer zu steuernden Prozesseinrichtung (11), zumindest einem Prozessmodul (13) und wenigstens einem Sicherheitsmodul (15), wobei
- die Prozesseinrichtung (11) an den Steuerausgang (21) einer lokalen, der Prozesseinrichtung (11) zugeordneten Steuereinheit (17) angeschlossen ist,
- die Steuereinheit (17) wenigstens einen Signaleingang (23, 25, 25') für nicht sicherheitsrelevante Prozesssignale (P) des Prozessmoduls (13) und für die Prozesssicherheit betreffende Sicherheitssignale (S, S') des Sicherheitsmoduls (15) aufweist, und
- die Steuereinheit (17) wenigstens ein zwischen den Signaleingang (23, 25, 25') und den Steuerausgang (21) geschaltetes Logikmodul (19) umfasst, in dem die Prozesssignale (P) und die Sicherheitssignale (S, S') logisch miteinander verknüpfbar sind und von dem das Ergebnis der logischen Verknüpfung am Steuerausgang (21) bereitstellbar ist,
**dadurch gekennzeichnet ,**
**dass** das Prozessmodul (13) und das Sicherheitsmodul (15) entfernt von der Steuereinheit (17) angeordnet und über ein gemeinsames Kommunikationssystem (27), insbesondere ein Feldbussystem, mit der Steuereinheit (17) verbunden sind und
**dass** die logische Verknüpfung derart ausgelegt ist, dass ein diskrepantes Signaleingangsmuster ein Verbleiben des Steuerausgangs (21) in einem sicheren Zustand zur Folge hat.

8. System nach Anspruch 7,
**dadurch gekennzeichnet,**
**dass** die Steuereinheit (17) mehrere Sicherheitseingänge (25') für Sicherheitssignale (S') umfasst, die mittels des Logikmoduls (19) zu einem resultierenden Sicherheitssignal (S) logisch miteinander verknüpfbar sind, wobei das resultierende Sicherheitssignal (S) mittels des Logikmoduls (19) wiederum mit den Prozesssignalen (P) logisch verknüpfbar ist.

9. System zur Prozesssteuerung,
mit wenigstens einer zu steuernden Prozesseinrichtung (11), zumindest einem Prozessmodul (13) und wenigstens einem Sicherheitsmodul (15), wobei
- die Prozesseinrichtung (11) an den Steuerausgang (21) einer lokalen, der Prozesseinrichtung (11) zugeordneten Steuereinheit (17) angeschlossen ist,
- die Steuereinheit (17) wenigstens einen Signaleingang (23, 25, 25') für nicht sicherheitsrelevante Prozesssignale (P) des Prozessmoduls (13) und für die Prozesssicherheit betreffende Sicherheitssignale (S, S') des Sicherheitsmoduls (15) aufweist, und
- die Steuereinheit (17) wenigstens ein zwischen den Signaleingang (23, 25, 25') und den Steuerausgang (21) geschaltetes Logikmodul (19) umfasst, in dem die Prozesssignale (P) und die Sicherheitssignale (S, S') logisch miteinander verknüpfbar sind und von dem das Ergebnis der logischen Verknüpfung am Steuerausgang (21) bereitstellbar ist,
**dadurch gekennzeichnet,**
**dass** die Steuereinheit (17) mehrere Sicherheitseingänge (25') für Sicherheitssignale (S') umfasst, die mittels des Logikmoduls (19) zu einem resultierenden Sicherheitssignal (S) logisch miteinander verknüpfbar sind, wobei das resultierende Sicherheitssignal (S) mittels des Logikmoduls (19) wiederum mit den Prozesssignalen (P) logisch verknüpfbar ist und
**dass** die logische Verknüpfung derart ausgelegt ist, dass ein diskrepantes Signaleingangsmuster ein Verbleiben des Steuerausgangs (21) in einem sicheren Zustand zur Folge hat.

10. System nach Anspruch 9,
**dadurch gekennzeichnet,**
**dass** zumindest das Prozessmodul (13) über ein Feldbussystem (27) mit der Steuereinheit verbunden ist.

11. System nach Anspruch 9 oder 10,
**dadurch gekennzeichnet,**
**dass** das Prozessmodul (13) und das Sicherheitsmodul (15) entfernt von der Steuereinheit (17) angeordnet und über ein gemeinsames Kommunikationssystem (27), insbesondere ein Feldbussystem, mit der Steuereinheit (17) verbunden sind.

12. System nach Anspruch 9 oder 10,
**dadurch gekennzeichnet,**
**dass** das Prozessmodul (13) entfernt von der Steuereinheit (17) angeordnet und über ein zentrales Kommunikationssystem (27), insbesondere ein Feldbussystem, mit der Steuereinheit (17) verbunden ist, und dass das Sicherheitsmodul (15) lokal im Bereich der Steuereinheit (17) und insbesondere entfernt von dem Prozessmodul (13) angeordnet und direkt mit der Steuereinheit (17) verbunden ist.

13. System nach einem der Ansprüche 7 bis 12,
**dadurch gekennzeichnet ,**
**dass** zumindest das Prozessmodul (13) über wenigstes einen lokalen Signaleingang der Steuereinheit (17) mit der Steuereinheit (17) verbunden ist.

14. System nach einem der Ansprüche 7 bis 13,
**dadurch gekennzeichnet,**
**dass** das Sicherheitsmodul (15) eine Sicherheitssteuerung, insbesondere in Form einer SPS, umfasst.

15. System nach einem der Ansprüche 7 bis 14,
**dadurch gekennzeichnet,**
**dass** das Sicherheitsmodul (15) zumindest einen Sicherheitssensor umfasst.

16. System nach einem der Ansprüche 7 bis 15,
**dadurch gekennzeichnet,**
**dass** für zumindest eine, insbesondere für jede, Prozesseinrichtung (11) in der Steuereinheit (17) mehrere, insbesondere zwei, Kanäle vorgesehen sind, in denen jeweils eine logische Verknüpfung von Prozesssignalen (P) und Sicherheitssignalen (S, S') durchführbar ist.

17. System nach einem der Ansprüche 7 bis 16,
**dadurch gekennzeichnet,**
**dass** die Spannungsversorgung für den Steuerausgang (21) von dem logischen Signalweg und/oder von der Spannungsversorgung der Prozesseinrichtung (11) getrennt ist, um eine sichere Stillsetzung des Steuerausgangs (21) zu ermöglichen.

## Claims

1. A method for process control,
in which at least one process device (11) to be controlled is controlled by at least one process module (13) and at least one safety module (15) in that process signals (P) not relevant to safety are transmitted by the process module (13) to a local control unit (17) associated with the process device (11) and safety signals (S) relating to the process safety are transmitted by the safety module (15), wherein
- the process signals (P) and the safety signals (S) are logically linked to one another in the control unit (17); and
- the result of the logical link is made available at a control output (21) of the control unit (17) to which the process device (11) to be controlled is connected,
**characterized in that**
the process module (13) and the safety module (15) communicate with the control unit (17) via a common communication system (27), in particular a field bus system; and
**in that** the logical link is designed such that a discrepant signal input pattern has the consequence of the control output (21) remaining in a safe state.

2. A method in accordance with claim 1,
**characterized in that**
at least one safety signal (S), which is logically linked to the process signals (P), is itself formed by a logical link of safety signals (S') relating to the process safety.

3. A method for process control,
in which at least one process device (11) to be controlled is controlled by at least one process module (13) and at least one safety module (15) in that process signals (P) not relevant to safety are transmitted by the process module (13) to a local control unit (17) associated with the process device (11) and safety signals (S) relating to the process safety are transmitted by the safety module (15), wherein
- the process signals (P) and the safety signals (S) are logically linked to one another in the control unit (17); and
- the result of the logical link is made available at a control output (21) of the control unit (17) to which the process device (11) to be controlled is connected,
**characterized in that**
at least one safety signal (S), which is logically linked to the process signals (P), is itself formed by a logical link of safety signals (S') relating to the process safety; and
**in that** the logical link is designed such that a discrepant signal input pattern has the consequence of the control output (21) remaining in a safe state.

4. A method in accordance with claim 3,
**characterized in that**
the process module (13) and the safety module (15) communicate with the control unit (17) via a common communication system (27), in particular a field bus system.

5. A method in accordance with claim 3,
**characterized in that**
the process module (13) communicates with the control unit (17) via a central communication system (27), in particular a field bus system, and the safety module (15) communicates directly with said control unit.

6. A method in accordance with any one of the preceding claims,
**characterized in that**
the logical link between the process signals (P) and the safety signals (S) and/or between a plurality of safety signals (S') serving for the forming of a resulting safety signal (S) is designed as a logical AND link.

7. A system for process control, in particular for the carrying out of a method in accordance with any one of the preceding claims, comprising at least one process device (11) to be controlled, at least one process module (13) and at least one safety module (15),
wherein
- the process device (11) is connected to the control output (21) of a local control unit (17) associated with the process device (11);
- the control unit (17) has at least one signal input (23, 25, 25') for process signals (P) of the process module (13) not relevant to safety and for safety signals (S, S') of the safety module (15) relating to the process safety; and
- the control unit (17) comprises at least one logic module (19) which is connected between the signal input (23, 25, 25') and the control output (21) and in which the process signals (P) and the safety signals (S, S') can be logically linked to one another and by which the result of the logical link can be provided at the control output (21),
**characterized in that**
the process module (13) and the safety module (15) are arranged remote from the control unit (17) and are connected to the control unit (17) via a common communication system (27), in particular a field bus system; and
**in that** the logical link is designed such that a discrepant signal input pattern has the consequence of the control output (21) remaining in a safe state.

8. A system in accordance with claim 7,
**characterized in that**
the control unit (17) comprises a plurality of safety inputs (25') for safety signals (S') which can be logically linked to one another to form a resulting safety signal (S) by means of the logic module (19), wherein the resulting safety signal (S) can in turn be logically linked to the process signals (P) by means of the logic module (19).

9. A system for process control,
comprising at least one process device (11) to be controlled, at least one process module (13) and at least one safety module (15),
wherein
- the process device (11) is connected to the control output (21) of a local control unit (17) associated with the process device (11);
- the control unit (17) has at least one signal input (23, 25, 25') for process signals (P) of the process module (13) not relevant to safety and for safety signals (S, S') of the safety module (15) relating to the process safety; and
- the control unit (17) comprises at least one logic module (19) which is connected between the signal input (23, 25, 25') and the control output (21) and in which the process signals (P) and the safety signals (S, S') can be logically linked to one another and by which the result of the logical link can be provided at the control output (21),
**characterized in that**
the control unit (17) comprises a plurality of safety inputs (25') for safety signals (S') which can be logically linked to one another to form a resulting safety signal (S) by means of the logic module (19), wherein the resulting safety signal (S) can in turn be logically linked to the process signals (P) by means of the logic module (19); and **in that** the logical link is designed such that a discrepant signal input pattern has the consequence of the control output (21) remaining in a safe state.

10. A system in accordance with claim 9,
**characterized in that**
at least the process module (13) is connected to the control unit via a field bus system (27).

11. A system in accordance with claim 9 or claim 10,
**characterized in that**
the process module (13) and the safety module (15) are arranged remote from the control unit (17) and are connected to the control unit (17) via a common communication system (27), in particular a field bus system.

12. A system in accordance with claim 9 or claim 10,
**characterized in that**
the process module (13) is arranged remote from the control unit (17) and is connected to the control unit (17) via a central communication system (27), in particular a field bus system; and **in that** the safety module (15) is arranged locally in the region of the control unit (17) and is in particular arranged remote from the process module (13) and is directly connected to the control unit (17).

13. A system in accordance with any one of the claims 7 to 12,
**characterized in that**
at least the process module (13) is connected to the control unit (17) via at least one local signal input of the control unit (17).

14. A system in accordance with any one of the claims 7 to 13,
**characterized in that**
the safety module (15) comprises a safety control, in particular in the form of a PLC.

15. A system in accordance with any one of the claims 7 to 14,
**characterized in that**
the safety module (15) comprises at least one safety sensor.

16. A system in accordance with any one of the claims 7 to 15,
**characterized in that**
a plurality of channels, in particular two channels, are provided for at least one process device (11), in particular for every process device, in the control unit (17), with a respective logical linking of process signals (P) and safety signals (S, S') being able to be carried out in said channels.

17. A system in accordance with any one of the claims 7 to 16,
**characterized in that**
the voltage supply for the control output (21) is separate from the logical signal path and/or from the voltage supply of the process device (11) to permit a safe stopping of the control output (21).

## Revendications

1. Procédé de commande de processus,
dans lequel au moins un ensemble de traitement à commander (11) est commandé par au moins un module de processus (13) et par au moins un module de sécurité (15) par transmission à une unité de commande locale (17), associée à l'ensemble de traitement (11), de signaux de processus non pertinents en termes de sécurité, émis par le module de processus (13), et de signaux de sécurité (S) concernant la sécurité du processus, émis par le module de sécurité (15),
dans lequel
- les signaux de processus (P) et les signaux de sécurité (S) sont logiquement chaînés dans l'unité de commande (17), et
- le résultat de l'enchaînement logique est délivré à une sortie de commande (21) de l'unité de commande (17), à laquelle l'ensemble de traitement à commander (11) est connecté,
**caractérisé en ce que**
le module de processus (13) et le module de sécurité (15) communiquent avec l'unité de commande (17) via un système de communication commun (27), en particulier via un système de bus de terrain, et
l'enchaînement logique est conçu de telle sorte qu'un motif d'entrée de signal discordant a pour conséquence que la sortie de commande (21) demeure dans un état sûr.

2. Procédé selon la revendication 1,
**caractérisé en ce que**
au moins un signal de sécurité (S) qui est logiquement chaîné avec le signal de processus (P) est formé lui-même par un enchaînement logique de signaux de sécurité (S') concernant la sécurité du processus.

3. Procédé de commande de processus,
dans lequel au moins un ensemble de traitement à commander (11) est commandé par au moins un module de processus (13) et par au moins un module de sécurité (15) par transmission à une unité de commande locale (17), associée à l'ensemble de traitement (11), de signaux de processus non pertinents en termes de sécurité, émis par le module de processus (13), et de signaux de sécurité (S) concernant la sécurité du processus, émis par le module de sécurité (15),
dans lequel
- les signaux de processus (P) et les signaux de sécurité (S) sont logiquement chaînés dans l'unité de commande (17), et
- le résultat de l'enchaînement logique est délivré à une sortie de commande (21) de l'unité de commande (17) à laquelle l'ensemble de traitement à commander (11) est connecté,
**caractérisé en ce que**
au moins un signal de sécurité (S) qui est logiquement chaîné avec le signal de processus (P) est formé lui-même par un enchaînement logique de signaux de sécurité (S') concernant la sécurité du processus, et l'enchaînement logique est conçu de telle sorte qu'un motif d'entrée de signal discordant a pour conséquence que la sortie de commande (21) demeure dans un état sûr.

4. Procédé selon la revendication 3,
**caractérisé en ce que**
le module de processus (13) et le module de sécurité (15) communiquent avec l'unité de commande (17) via un système de communication commun (27), en particulier via un système de bus de terrain.

5. Procédé selon la revendication 3,
**caractérisé en ce que**
le module de processus (13) communique avec l'unité de commande (17) via un système de communication central (27), en particulier via un système de bus de terrain, et le module de sécurité (15) communique directement avec ladite unité de commande.

6. Procédé selon l'une des revendications précédentes,
**caractérisé en ce que**
l'enchaînement logique entre les signaux de processus (P) et les signaux de sécurité (S) et/ou entre plusieurs signaux de sécurité (S') servant à former un signal de sécurité résultant (S) est conçu comme enchaînement logique ET.

7. Système de commande de processus, en particulier pour la mise en oeuvre d'un procédé selon l'une des revendications précédentes,
comportant au moins un ensemble de traitement (11) à commander, au moins un module de processus (13) et au moins un module de sécurité (15), dans lequel
- l'ensemble de traitement (11) est connecté à la sortie de commande (21) d'une unité de commande locale (17) associée à l'ensemble de traitement (11).
- une unité de commande (17) comprend au moins une entrée de signal (23, 25, 25') pour des signaux de processus (P) non pertinents en termes de sécurité, émis par le module de processus (13), et pour des signaux de sécurité (S, S') concernant la sécurité du processus, émis par le module de sécurité (15),
- l'unité de commande (17) comprend au moins un module logique (19) connecté entre l'entrée de signal (23, 25, 25') et la sortie de commande (21), dans lequel les signaux de processus (P) et les signaux de sécurité (S, S') sont susceptibles d'être chaînés logiquement entre eux et dont le résultat de l'enchaînement logique est susceptible d'être délivré à la sortie de commande (21),
**caractérisé en ce que**
le module de processus (13) et le module de sécurité (15) sont agencés en étant éloignés de l'unité de commande (17) et sont connectés à l'unité de commande (17) via un système de communication commun (27), en particulier via un système de bus de terrain, et
l'enchaînement logique est conçu de telle sorte qu'un motif d'entrée de signal discordant a pour conséquence que la sortie de commande (21) demeure dans un état sûr.

8. Système selon la revendication 7,
**caractérisé en ce que**
l'unité de commande (17) comprend plusieurs entrées de sécurité (25') pour des signaux de sécurité (S'), qui sont susceptibles d'être chaînés logiquement entre eux en un signal de sécurité résultant (S) au moyen du module logique (19), le signal de sécurité résultant (S) pouvant à son tour être chaîné logiquement avec les signaux de processus (P) au moyen du module logique (19).

9. Système de commande de processus,
comportant au moins un ensemble de traitement à commander (11), au moins un module de processus (13) et au moins un module de sécurité (15),
dans lequel
- l'ensemble de traitement (11) est connecté à la sortie de commande (21) d'une unité de commande locale (17) associée à l'ensemble de traitement (11).
- l'unité de commande (17) comprend au moins une entrée de signal (23, 25, 25') pour des signaux de processus (P) non pertinents en termes de sécurité, émis par le module de processus (13), et pour des signaux de sécurité (S, S') concernant la sécurité du processus, émis par le module de sécurité (15), et
- l'unité de commande (17) comprend au moins un module logique (19) connecté entre l'entrée de signal (23, 25, 25') et la sortie de commande (21), dans lequel les signaux de processus (P) et les signaux de sécurité (S, S') sont susceptibles d'être logiquement chaînés entre eux et dont le résultat de l'enchaînement logique est susceptible d'être délivré à la sortie de commande (21),
**caractérisé en ce que**
l'unité de commande (17) comprend plusieurs entrées de sécurité (25') pour des signaux de sécurité (S'), qui sont susceptibles d'être chaînés logiquement entre eux en un signal de sécurité résultant (S) au moyen du module logique (19), le signal de sécurité résultant (S) pouvant à son tour être chaîné logiquement avec les signaux de processus (P) au moyen du module logique (19), et
l'enchaînement logique est conçu de telle sorte qu'un motif d'entrée de signal discordant a pour conséquence que la sortie de commande (21) demeure dans un état sûr.

10. Système selon la revendication 9,
**caractérisé en ce que**
au moins le module de processus (13) est connecté à l'unité de commande via un système de bus de terrain (27).

11. Système selon la revendication 9 ou 10,
**caractérisé en ce que**
le module de processus (13) et le module de sécurité (15) sont agencés en étant éloignés de l'unité de commande (17) et sont connectés à l'unité de commande (17) via un système de communication commun (27), en particulier via un système de bus de terrain.

12. Système selon la revendication 9 ou 10,
**caractérisé en ce que**
le module de processus (13) est agencé en étant éloigné de l'unité de commande (17) et est connecté à l'unité de commande (17) via un système de communication central (27), en particulier via un système de bus de terrain,
et **en ce que** le module de sécurité (15) est agencé localement au niveau de l'unité de commande (17) et en particulier en étant éloigné du module de processus (13) et est connecté directement à l'unité de commande (17).

13. Système selon l'une des revendications 7 à 12,
**caractérisé en ce que**
au moins le module de processus (13) est connecté à l'unité de commande (17) via au moins une entrée de signal locale de l'unité de commande (17).

14. Système selon l'une des revendications 7 à 13,
**caractérisé en ce que**
le module de sécurité (15) comprend une commande de sécurité, en particulier sous la forme d'un APS (automate programmable de sécurité).

15. Système selon l'une des revendications 7 à 14,
**caractérisé en ce que**
le module de sécurité (15) comprend au moins un capteur de sécurité.

16. Système selon l'une des revendications 7 à 15,
**caractérisé en ce que**
il est prévu, pour au moins un, en particulier pour chaque ensemble de traitement (11) dans l'unité de commande (17), plusieurs canaux, en particulier deux, dans chacun desquels il est possible de mettre en oeuvre un enchaînement logique de signaux de processus (P) et de signaux de sécurité (S, S').

17. Système selon l'une des revendications 7 à 16,
**caractérisé en ce que**
l'alimentation en tension pour la sortie de commande (21) est séparée du trajet de signal logique et/ou de l'alimentation en tension de l'ensemble de traitement (11), afin de permettre une mise à l'arrêt sûre de la sortie de commande (21).
